# EUROPÄISCHE PATENTSCHRIFT

(11) **EP 3 372 129 B1**
(45) Veröffentlichungstag und Bekanntmachung des Hinweises auf die Patenterteilung: **04.09.2019**
(21) Anmeldenummer: 18154436.2
(22) Anmeldetag: 31.01.2018
(51) Int. Cl.: A47J 41/00

(54) **VORRATSBEHÄLTER FÜR FLÜSSIGKEITEN UND/ODER STREUGUT, INSBESONDERE GEFÄSS ZUR FLÜSSIGKEITSAUFNAHME, SOWIE VORRATSBEHÄLTERDECKEL, INSBESONDERE GEFÄSSDECKEL**
STORAGE CONTAINER FOR LIQUIDS AND/OR MATERIAL THAT IS TO BE SPREAD, PARTICULARLY CONTAINER FOR LIQUIDS, AND STORAGE CONTAINER LID, IN PARTICULAR CONTAINER LID
RÉSERVOIR DE STOCKAGE POUR LIQUIDES ET/OU MATIÈRES GRANULAIRES, EN PARTICULIER RÉSERVOIR DE RÉCEPTION DU LIQUIDE AINSI QUE COUVERCLE DU RÉSERVOIR DE STOCKAGE, EN PARTICULIER COUVERCLE DU RÉSERVOIR

(30) Priorität: 09.03.2017 DE 102017203901
(43) Veröffentlichungstag der Anmeldung: 12.09.2018
(73) Patentinhaber: WMF Group GmbH, 73312 Geislingen/Steige (DE)
(72) Erfinder: Abele, Werner, 89558 Böhmenkirch (DE)
(74) Vertreter: Pfenning, Meinig & Partner mbB

(56) Entgegenhaltungen:
- EP-A1- 0 077 883
- WO-A1-2016/036880
- DE-A1- 2 355 610

## Beschreibung

Die vorliegende Erfindung bezieht sich auf einen Vorratsbehälter für Flüssigkeiten und/oder Streugut, insbesondere auf ein Gefäß zur Flüssigkeitsaufnahme (insbesondere eine Isolierkanne), sowie auf einen Vorratsbehälterdeckel, insbesondere einen Gefäßdeckel. Der Vorratsbehälterdeckel verschließt einen Körper, insbesondere verschließt somit der Gefäßdeckel einen Gefäßkörper. Der Körper bzw. Vorratsbehälterkörper und der Deckel bzw. Vorratsbehälterdeckel können zusammen den Vorratsbehälter ausbilden. Insbesondere können somit der Gefäßkörper und der Gefäßdeckel zusammen das Gefäß ausbilden.

Die DE 23 55 610 offenbart einen Thermosbehälter mit einem Verschlussdeckel, der sowohl abnehmbar wie in eine Ausgießstellung bringbar ist.

Die GB 2 114 959 offenbart einen Getränkebehälter wobei der Deckel einen Gewindegang und der Körper ein Gewindesegment aufweist.

Die WO 2016/036880 offenbart einen Getränkebehälter, der einen Hauptkörperabschnitt mit einer offenen Oberseite, einem geschlossenen Boden und einem Innenraum, der ein erstes Volumen definiert, und eine entfernbare Abdeckung umfasst, die einen Boden und eine im Allgemeinen zylindrische Seitenwand aufweist, die sich von dem Boden nach oben erstreckt.

Die Erfindung umfasst ganz allgemein Vorratsbehälter, bei denen mit einem erfindungsgemäßen Deckel bzw. Deckelsystem mit einer vorgegebenen Umdrehung eine größere Öffnung (beispielsweise zum Streuen) erreicht werden soll, als mit einem Gewinde gleicher Steigung (vgl. nachfolgende Beschreibung). Erfindungsgemäße Vorratsbehälter können somit neben Gefäßen zur Flüssigkeitsaufnahme wie z.B. Isolierkannen z.B. Vorratsbehälter zur Aufnahme von Festkörpern z.B. in Form von Streugut, also z.B. Salzstreuer, Pfefferstreuer, Gewürzstreuer, Puderzuckerstreuer oder dergleichen sein.

Nachfolgend wird die Erfindung aber am Beispiel eines Gefäßes zur Flüssigkeitsaufnahme, umfassend einen Gefäßkörper und einen Gefäßdeckel, beschrieben. Dies ist aber nicht einschränkend gemeint, d.h. bei dem genannten Gefäß, Gefäßdeckel und Gefäßkörper kann es sich ganz allgemein um einen Vorratsbehälter, (Vorratsbehälter-)Deckel und (Vorratsbehälter-)Körper handeln. Vergleiche dazu auch die vorangehend genannten Beispiele.

Aufgabe der vorliegenden Erfindung ist es, den Verschlussmechanismus eines solchen Vorratsbehälters (Gefäßes) anders als im Stand der Technik auszugestalten, insbesondere ihn zu verbessern. Insbesondere geht es dabei darum, den Verschlussmechanismus so zu verbessern, dass je nach Stellung des Deckels relativ zum Körper beim Eindrehen des Deckels in den Körper eine optimale Nutzerfreundlichkeit erreicht wird.

Die erfindungsgemäße Aufgabe wird durch einen Vorratsbehälter (bzw. ein Gefäß) gemäß Anspruch 1 sowie einen Vorratsbehälterdeckel (bzw. einen Gefäßdeckel) hierfür gemäß Anspruch 13 gelöst. Vorteilhafte Ausgestaltungsformen lassen sich dabei jeweils den abhängigen Ansprüchen entnehmen.

Die vorliegende Erfindung wird nachfolgend zunächst allgemein, dann anhand eines konkreten Ausführungsbeispiels gezeigt, dass die meisten vorteilhaften Merkmale gemäß der abhängigen Ansprüchen zeigt. Es können jedoch jeweils einzelne vorteilhafte Merkmale aus abhängigen Ansprüchen weggelassen werden oder auch auf andere Art und Weise als im Ausführungsbeispiel gezeigt miteinander kombiniert werden.

Wesentliche Merkmale der Erfindung beschreibt Anspruch 1.

Erfindungsgemäß ist ein Gewinde in der Regel eine profilierte Einkerbung, die fortlaufend wendelartig um eine bevorzugt zylinderförmige Wandung (innen oder außen) in einer Schraubenlinie verläuft. Die Einkerbung ist dabei in der Regel der Gewindegang. Die Gewindesteigung ist die Ganghöhe des Gewindes und wird nachfolgend vereinfacht auch als "Steigung" bezeichnet. Das Eindrehen erfolgt in der Regel um eine Drehachse, die in der Regel der Gefäßlängsachse und/oder (annähernd) einer Gefäßsymmetrieachse entspricht. Das Eindrehen kann insbesondere ein Einschrauben sein. Das Ineingriffbringen erfolgt in der Regel mechanisch.

Erfindungsgemäß können zum vollständigen Eindrehen (und somit in der Regel dem Verschließen des Gefäßkörpers bzw. des Gefäßes) mehrere Umdrehungen des Gefäßdeckels (nachfolgend auch als "Deckel" abgekürzt) um die Drehachse notwendig sein. Es ist grundsätzlich aber auch möglich, dass bereits nach einer einzigen, oder sogar einer nicht ganz vollständigen Umdrehung (also einer Drehung des Deckels relativ zum Gefäßkörper, der nachfolgend auch als "Körper" abgekürzt wird, um weniger als 360 Grad) der Deckel vollständig in den Körper eingedreht ist bzw. letzteren verschließt. Unter einem Verschließen wird erfindungsgemäß in der Regel ein fluiddichtes, zumindest aber ein flüssigkeitsdichtes Verschließen verstanden.

In der Regel ist der Deckel an einem (in der Regel dem oberen) Ende des Körpers in den Körper eindrehbar bzw. einschraubbar.

In Bezug auf den Deckel- bzw. Körperumfang (also in Gewindeumlaufrichtung) gesehen ist der Gewindegang in der Regel ein- oder mehrfach vollständig umlaufend (dabei sind auch Umfangsbruchteile möglich, z. B. ca. 1.75-fach oder 2.5-fach umlaufend) und in der Regel auch ohne Unterbrechung (bis auf eventuell vorhandene Ausgieß- und/oder Belüftungsöffnungen) ausgebildet. Erfindungsgemäß ist das Gewindesegment diesbezüglich meist anders ausgebildet: Es kann in Gewindeumlaufrichtung bzw. in Umfangsrichtung des Körpers bzw. des Deckels gesehen ein echtes Segment sein, erstreckt sich also in der Regel in diese Richtung (bzw. um die Drehachse) gesehen über einen Winkel von deutlich kleiner als 360° (360 Grad), bevorzugt deutlich kleiner als 180 Grad, und ist beispielsweise über einen Winkel im Bereich (inklusive der Grenzwerte) von 50 Grad bis 130 Grad, bevorzugt von 70 Grad bis 110 Grad, besonders bevorzugt von 90 Grad, umlaufend erstreckt.

Der Gewindegang und das Gewindesegment (bzw. die Gewindegänge und die Gewindesegmente) sind in der Regel komplementär zueinander ausgebildet. Insbesondere kann/können das/die Gewindesegment(e) formschlüssig in den/die Gewindegang/Gewindegänge eingreifen, also mit dem/den Gewindegang/Gewindegängen in Eingriff gebracht werden. Das Eingreifen ist erfindungsgemäß in der Regel als ein mechanisches Eingreifen zu verstehen.

Bevorzugt (vgl. auch das Ausführungsbeispiel) weist zu besagtem Eindrehen der Deckel einen oder mehrere (vgl. die nachfolgenden Ansprüche) Gewindegang/-gänge und der Gefäßkörper ein vorspringendes oder mehrere vorspringende, (jeweils) in Eingriff mit dem Gewindegang bzw. einem der Gewindegänge bringbares Gewindesegment bzw. bringbare Gewindesegmente auf.

Alternativ dazu, entsprechend der im Hauptanspruch mit "umgekehrt" bezeichneten Variante, kann zu besagtem Eindrehen aber auch der Gefäßkörper einen oder mehrere (vgl. nachfolgende Ansprüche) Gewindegang/-gänge und der Gefäßdeckel ein vorspringendes oder mehrere vorspringende, (jeweils) in Eingriff mit dem Gewindegang bzw. einem der Gewindegänge bringbares Gewindesegment bzw. bringbare Gewindesegmente aufweisen.

Das System gemäß Anspruch 1 hat auch den Vorteil, insbesondere wenn Körper und Deckel aus Kunststoff hergestellt werden, einer sehr einfachen und niederkomplexen Realisierbarkeit.

Erste vorteilhafterweise realisierbare Merkmale beschreibt Anspruch 2.

Weitere vorteilhafterweise realisierbare Merkmale beschreibt Anspruch 3.

Die gegenständliche(n) Ausgestaltung(en), d. h. die Anordnung(en), die Größe(n) und/oder die Form(en) des Körpers und des Deckels bzw. der Gewindegänge und der Gewindesegmente desselben, kann/können also so erfolgen, dass beim Eindrehen des Deckels in den Körper die Gewindesegmente und die Gewindegänge (jeweils) paarweise in Eingriff gehen. Die Eingriffe erfolgen dabei in der Regel mechanisch. "Parallel" meint dabei, dass es beim Ineingriffbringen eines ersten Gewindesegments mit einem ersten Gewindegang auch zu einem Ineingriffbringen eines zweiten Gewindesegments mit einem zweiten Gewindegang kommt. Besagtes Ineingriffbringen bzw. Ineingriffgehen muss dabei nicht zeitgleich erfolgen, wird es aber in der Regel tun. Dies hängt von der konkreten gegenständlichen Ausgestaltung des Körpers und des Deckels ab.

So können beispielsweise genau zwei um 180 Grad (um die Drehachse gesehen) verdreht zueinander positionierte bzw. beginnende Gewindegänge und genau zwei um 180 Grad (um die Drehachse gesehen) verdreht zueinander positionierte Gewindesegmente realisiert sein. Dabei kann (die Zuordnung von Gang und Segment ist dabei abhängig von der Relativpositionierung des Körpers und des Deckels zueinander, gesehen um die Drehachse herum) das eine Gewindesegment in den Beginn (also in das äußere Gewindegangende) des einen Gewindegangs und das andere Gewindesegment in den Beginn (also das äußere Gewindegangende) des anderen Gewindegangs eingreifen bzw. eintreten.

Selbstverständlich können auch mehr als zwei Gewindesegmente und mehr als zwei Gewindegänge (wobei die Segment- und die Ganganzahl in der Regel identisch sind) vorgesehen sein, wobei dann die einzelnen Segmente und Gänge beim Eindrehen des Deckels in den Körper jeweils paarweise in Eingriff gehen können.

Weitere vorteilhafterweise realisierbare Merkmale lassen sich Anspruch 4 entnehmen.

Die Steigung (Ganghöhe) bzw. der Wert derselben des Gewindegangs bzw. eines jeden Gewindegangs kann sich entlang der Gangwindung bzw. in Richtung seiner Gewindeschraubenlinie (die sich um die Drehachse bzw. die zentrale Schraubenachse des Gewindes herum windet) gesehen also genau einmal ändern: von einer größeren Steigung zu einer kleineren (gesehen vom äußeren Gewindegangende zum inneren Gewindegangende, vgl. Anspruch 5) oder umgekehrt. Am einen Gewindegangende kann der (jeweilige) Gewindegang eine andere (beispielsweise größere) Steigung aufweisen als an seinem diesem Ende in Ganglängsrichtung gesehen gegenüberliegenden, also dem anderen Gewindegangende. (Beispielsweise kann die Steigung dort kleiner sein.)

Weitere vorteilhafterweise realisierbare Merkmale lassen sich Anspruch 5 entnehmen.

Der (vollständig) verschlossene Zustand von Körper und Deckel ist in der Regel diejenige Relativposition von Körper und Deckel, bei der das (jeweilige) Gewindesegment weitestmöglich in den (zugehörigen) Gewindegang hineingedreht worden ist. Dabei haben in der Regel (axial bzw. längs der Drehachse gesehen) Körper und Deckel den geringstmöglichen Abstand voneinander und/oder können mittels einer Dichtung bzw. Dichtungen gegeneinander fluiddicht abgedichtet sein.

Umgekehrt ist es ebenso denkbar, die Steigung am bzw. an den äußeren Gewindegangende(n) kleiner zu machen als am bzw. an den inneren Gewindegangende(n).

Weitere vorteilhafterweise realisierbare Merkmale lassen sich Anspruch 6 entnehmen.

Gemäß der drei vorangehenden Ansprüche lässt sich Folgendes realisieren: Der oder die Gewindegang/-gänge kann/können auch genau drei, genau vier, also ganz allgemein mehr als genau zwei unterschiedliche Steigungen bzw. Steigungswerte aufweisen. So sind entlang der Gangwindung bzw. in Umfangs- bzw. Gewindeschraubenlinienrichtung gesehen beispielsweise genau drei Abschnitte unterschiedlicher Steigung möglich. Hierbei kann am inneren Gewindegangende eine kleinere Steigung realisiert sein, anschließend in einem mittleren Gangabschnitt eine relativ dazu größere Steigung und schließlich am äußeren Gewindegangende wieder eine relativ zur größeren Steigung kleinere Steigung. (Am äußeren Gewindegangende kann aber auch eine noch größere Steigung als im mittleren Gangabschnitt realisiert werden.)

Weitere vorteilhafterweise realisierbare Merkmale lassen sich den Ansprüchen 7 bis 9 entnehmen.

Die erste Variante aus Anspruch 10 wird nachfolgend im Detail im Ausführungsbeispiel beschrieben. Die zweite Variante ("oder umgekehrt") ist nachfolgend nicht näher beschrieben und nicht gezeigt. Bei letzterer Variante kann der Gefäßdeckel beim Eindrehen in den Gefäßkörper letzteren außenumfangsseitig umschließen.

Das Innengewinde kann komplementär zum Außengewinde ausgebildet sein (in der Regel geschieht dies mittels des/der Segments/Segmente des Innengewindes und des/der Gewindegangs/Gewindegänge des Außengewindes).

Weitere vorteilhafterweise realisierbare Merkmale beschreiben die Ansprüche 11 bis 12.

Die Selbsthemmung kann dabei folgenden Einflussgrößen unterliegen:
- Material und Oberflächenrauigkeit des Innengewindes,
- Material und Oberflächenrauigkeit des Außengewindes,
- Material der (ggf. über das Gewinde vorgespannten) Dichtung, und/oder
- Steigung des Gewindes.

Am Deckel kann sich, z.B. in einer umlaufenden Ringnut, eine Dichtung, z.B. ein O-Ring (z.B. aus Silikon), befinden die/der den Deckel zum Körper (z.B. Kanne) hin abdichtet. Es ist nicht notwendig, die Gewindegänge an sich abzudichten.

Erfindungsgemäß kann ein Gefäß zur Flüssigkeitsaufnahme bzw. ein Deckel desselben (insbesondere eine Isolierkanne bzw. ein Isolierkannendeckel) so realisiert werden, dass bereits mit einer halben Umdrehung des Deckels aus dem geschlossenen Zustand heraus eine entsprechend axiale Bewegung erreicht werden kann, die die Ausgießöffnung des Deckels ausreichend weit öffnet. Hierzu kann dieser Deckel mit einem zweigängigen - allgemein: mehrgängigen - Gewinde mit zwei - allgemein: mehreren - unterschiedlichen Steigungen je Gewindegang ausgestattet sein.

Eine Besonderheit des erfindungsgemäßen Gewindes und somit der erfindungsgemäßen Verbindung von Gefäß (Kanne) zu Deckel ist der unterschiedlich zurücklegbare axiale Weg (also der Weg längs der Drehachse) bei gleichwertiger Deckelumdrehung in den unterschiedlichen Steigungs- bzw. Ganghöhenbereichen des Gewindegangs / der Gewindegänge. Ermöglicht werden kann dies durch ein umlaufendes, mit zwei Steigungen versehenes Außengewinde (zwei Gänge) am Deckel und durch zwei speziell daran angepasste (also komplementär zum Außengewinde ausgebildete) Gewindesegmente als Innengewinde am Gefäßkörper (Kanne). Diese Gewindesegmente können jeweils so ausgeformt werden, dass jeweils sich diagonal gegenüberliegende Gewindeflächen im flacheren bzw. im steileren Gewindesteigungsbereich des Deckels zur Anlage und somit zum Tragen kommen.

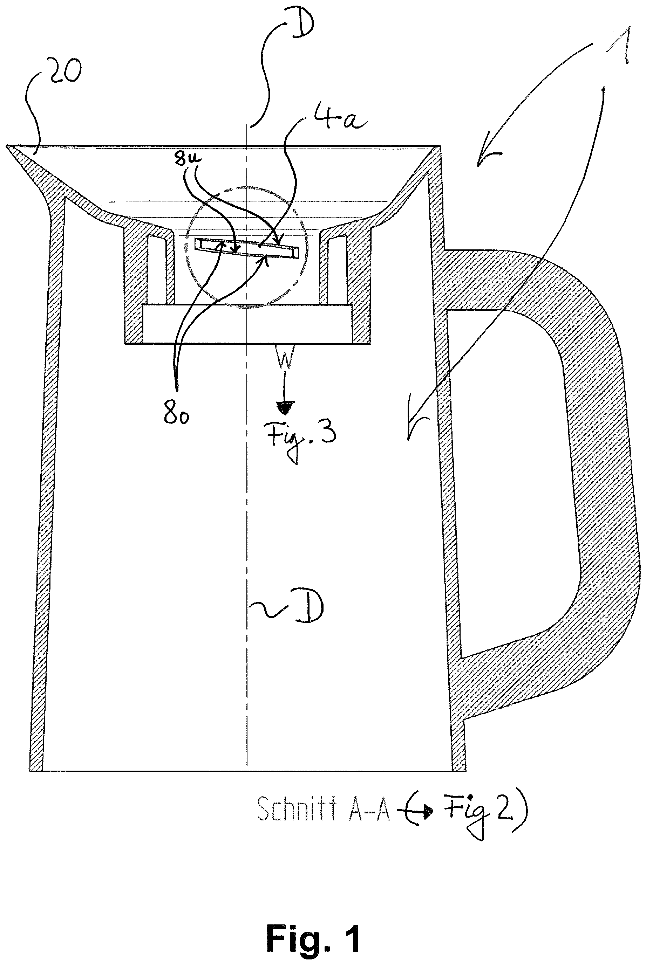

Sofern nichts Anderes gesagt wird, zeigen in den nachfolgenden Figuren des Ausführungsbeispiels (bis auf Figur 1) gekreuzt schraffierte Flächen das obere bzw. innere Gewindegangende (beispielsweise über eine Viertelumdrehung um die Drehachse mit flacherer Steigung ausgebildet) bzw. die diesem Gewindegangende bzw. -abschnitt entsprechenden Gewindegang-Anliegeflächen (Flächen des Gewindesegments), die in diesem oberen Gewindegangabschnitt in Eingriff sind. Die Steigung dieses (oberen) Gewindegangabschnitts (Gewindegangbereichs) kann so ausgelegt sein, dass Selbsthemmung herrscht. Hierdurch kann das eigentliche Verschließen des Gefäßes erfolgen (wenn vorhanden, kann es hierdurch auch zum Zusammendrücken einer Dichtung kommen zu besagtem Verschließen). Dabei sind der Gefäßkörper und der Gefäßdeckel vorzugsweise so auszubilden, dass sich der Deckel nicht selbsttätig öffnen kann.

Beim Verhältnis der beiden Steigungen zueinander ist vorrangig der zu erreichende axiale Weg ausschlaggebend.

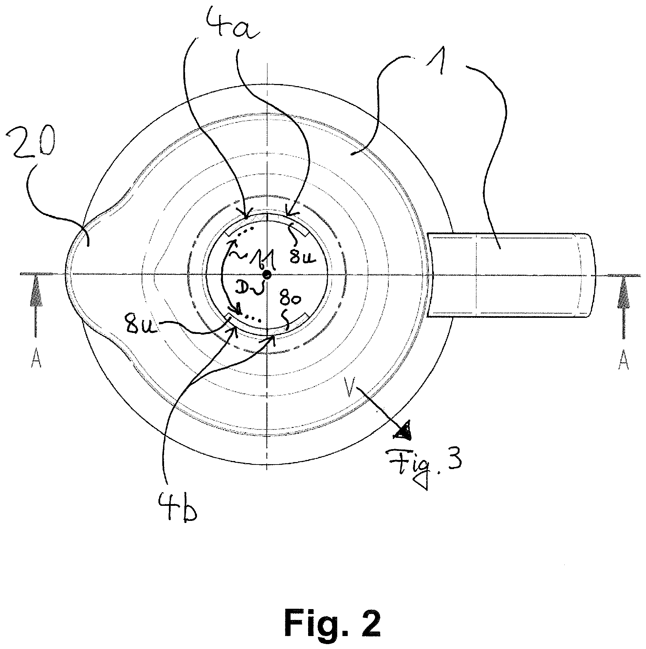

In den Figuren 2 bis 11 zeigen senkrecht schraffierte Flächen den unteren Gewindegangbereich (also den restlichen Gewindeabschnitt außerhalb des oberen Gewindegangbereichs), der die steilere Steigung aufweist, bzw. die zugehörigen Gewindegang-Anliegeflächen (als Flächen des Gewindegangsegments), die in besagtem unteren Gewindegangbereich mit letzterem in Eingriff sind, an. In diesem Gewinde(gang)bereich ist in der Regel eine Selbsthemmung nicht erwünscht; somit kann in diesem Bereich eine schnellere Höhenbewegung (axial, also längs der Drehachse) realisiert werden. Dies hat beispielsweise den Vorteil einer schnelleren Freigabe der Ausgießöffnung oder den Vorteil, dass der Deckel schneller vollständig aus dem Körper ausgeschraubt werden kann.

Alternativ zum nachfolgend im Detail beschriebenen Ausführungsbeispiel können aber auch mehrgängige Gewinde mit mehr als zwei Gewindegängen realisiert werden. Ebenso können anstelle der im Ausführungsbeispiel gezeigten länglichen Gewindesegmente z. B. runde Zapfen als Gewindesegment dienen.

Auch bei dieser Ausführungsvariante kann Selbsthemmung bestehen (bei entsprechend der Materialpaarungen von Deckel und Körper ausgelegter, flacherer Steigung). Der Nachteil dieser Variante ist in der Regel, dass die Aufnahmefähigkeit für Axialkräfte geringer wird, was jedoch bei einer handbetätigten Schraubdeckellösung nicht unbedingt zu Buche schlagen muss. Der Vorteil dieser Variante ist in der Regel, dass stärkere und kürzere Steigungswechsel möglich sein können, was den Freiheitsgrad der erreichbaren Axialbewegungen/Umdrehung erhöht.

Zum Ausführungsbeispiel zeigt:
- Fig. 1: einen Querschnitt (die zentrale Gewindegangachse bzw. Drehachse D verläuft in der gezeigten Schnittebene) durch den Gefäßkörper (hier: Kanne 1);
- Fig. 2: eine Draufsicht auf die Kanne ohne Deckel senkrecht zur Drehachse D;

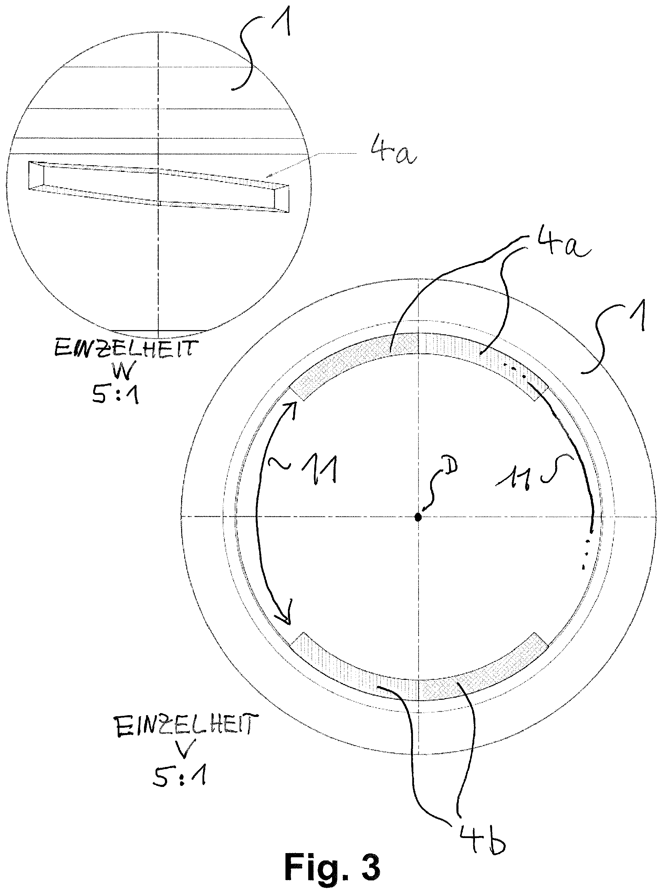

- Fig. 3: die Einzelheit W und die Einzelheit V (vgl. strichpunktierte Linien in Figur 1 bzw. in Figur 2) in Vergrößerung;

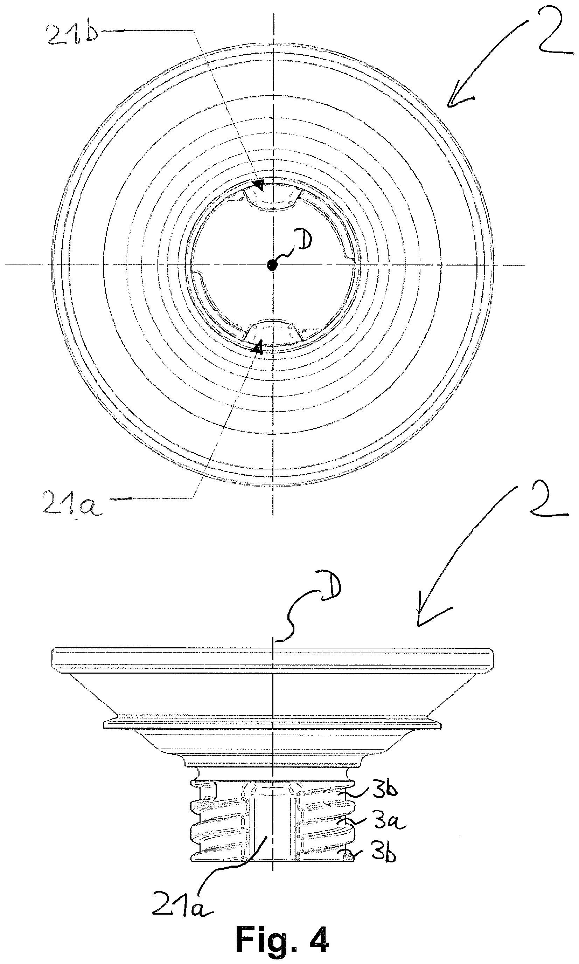

- Fig. 4: eine Ansicht des Deckels von unten senkrecht zur Drehachse D durch den Kannendeckel 2 (oben) und eine Seitenansicht_des Deckels 2, in der die Drehachse mit D gekennzeichnet ist (unten); dabei ist der komplette Deckel 2 gezeigt, also mit seinen beiden sich in Bezug auf die Drehachse D gesehen diagonal gegenüberliegenden, also um die Drehachse D gesehen um 180° zueinander versetzt positionierten Ausgieß- und Belüftungsöffnungen 21a und 21b;

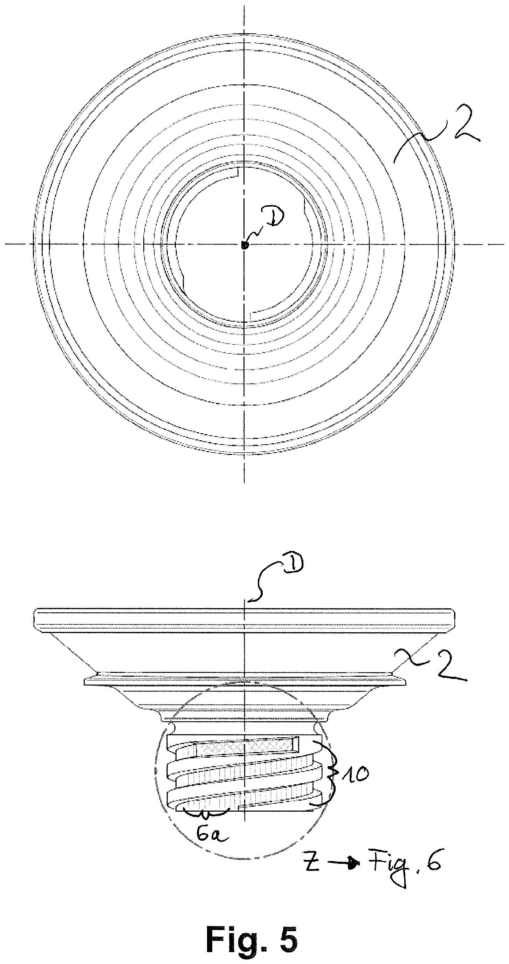

- Fig. 5: eine Ansicht und eine Seitenansicht wie in Figur 4, aber in vereinfachter Ansicht ohne Ausgieß- und Belüftungsöffnungen (zur besseren Darstellung);

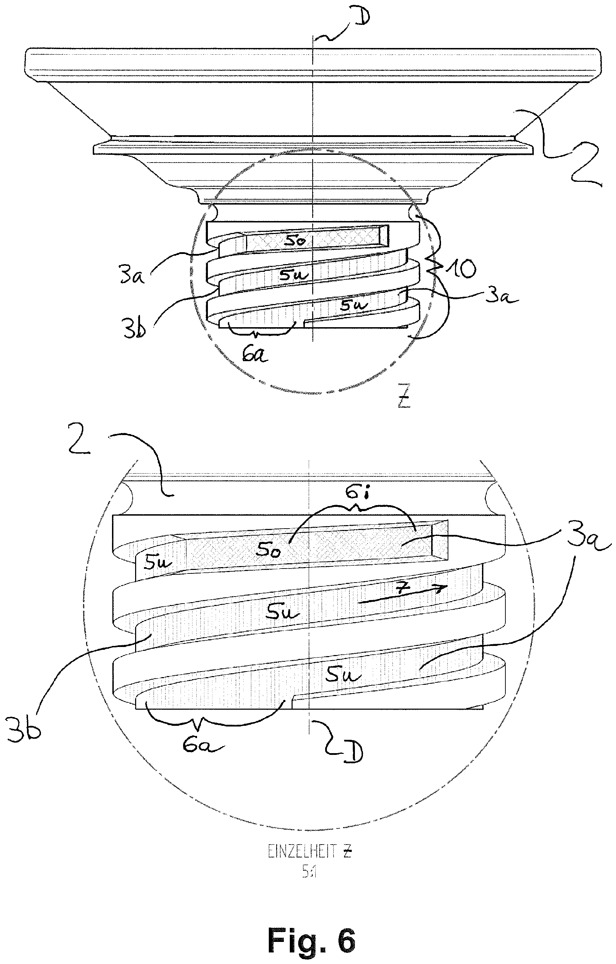

- Fign. 6-8: drei Projektionsansichten (jeweils aus unterschiedlichen Richtungen) auf Ebenen, in denen die Drehachse D verläuft, des Deckels 2 in vereinfachter Ansicht, nämlich in einer Ansicht, bei der die Gewindegänge ohne Radien dargestellt sind und die Ausgieß- und Belüftungsöffnungen nicht dargestellt sind; dabei zeigen jeweils die unteren Figurenteile vergrößerte Darstellungen der oberen Figurenteile;

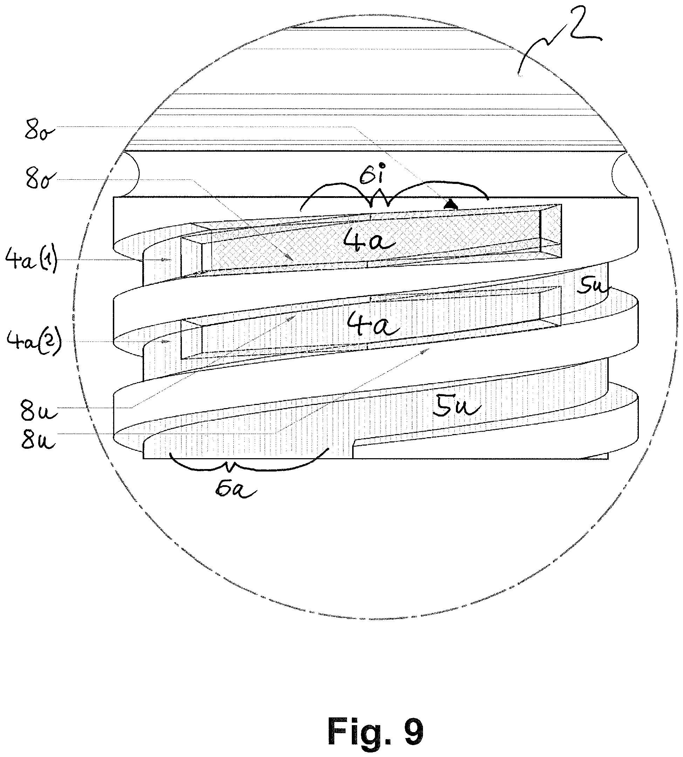

- Fig. 9: das Anliegen eines Gewindesegments (hier: Segment 4a) am oberen, also inneren Gewindegangende 6i, also in einem Gangabschnitt mit kleinerer Steigung (im oberen Bereich der Figur gezeigt); sowie das Anliegen desselben Gewindesegments 4a in/an einem weiter unten liegenden (also zur Kanne hin weisenden) Gangabschnitt mit größerer Steigung, also außerhalb des oberen Gewindegangendes (das Segment 4a ist hier in einem Gewindegangabschnitt auf - entlang der Drehachse D gesehen - mittlerer Höhe skizziert);

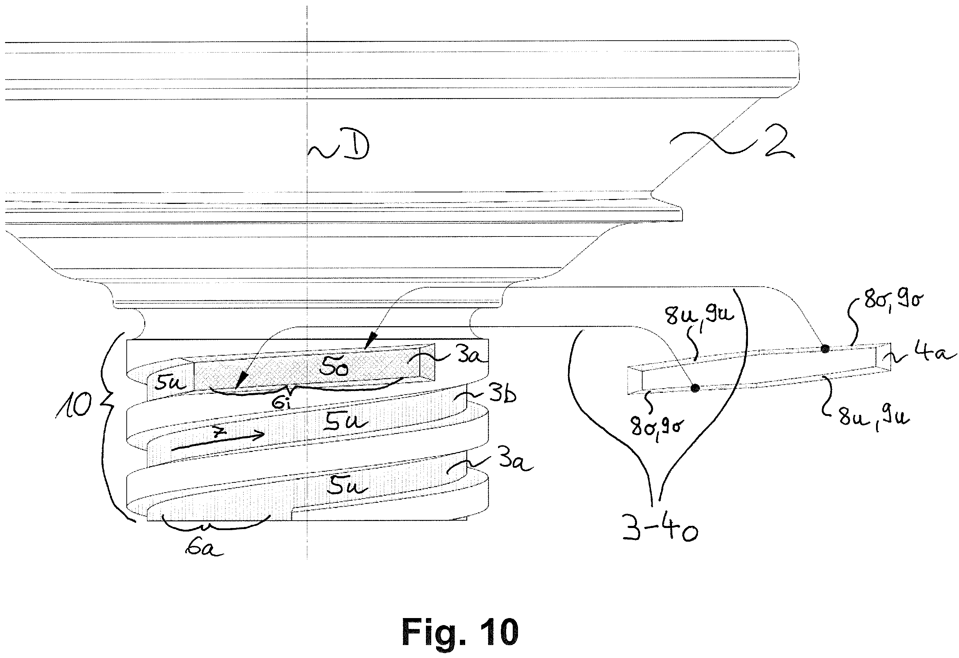

- Fig. 10: das Anliegen des Segments 4a in einem Gangabschnitt mit kleinerer Steigung 5o (also im Bereich des oberen Gangendes 6i), wobei das Segment 4a mit den entsprechenden Gewindegang-Anliegeflächen 8o kleinerer Segmentsteigung 9o (die gleich groß ist wie die kleinere Gewindegangsteigung 5o) anliegt; und

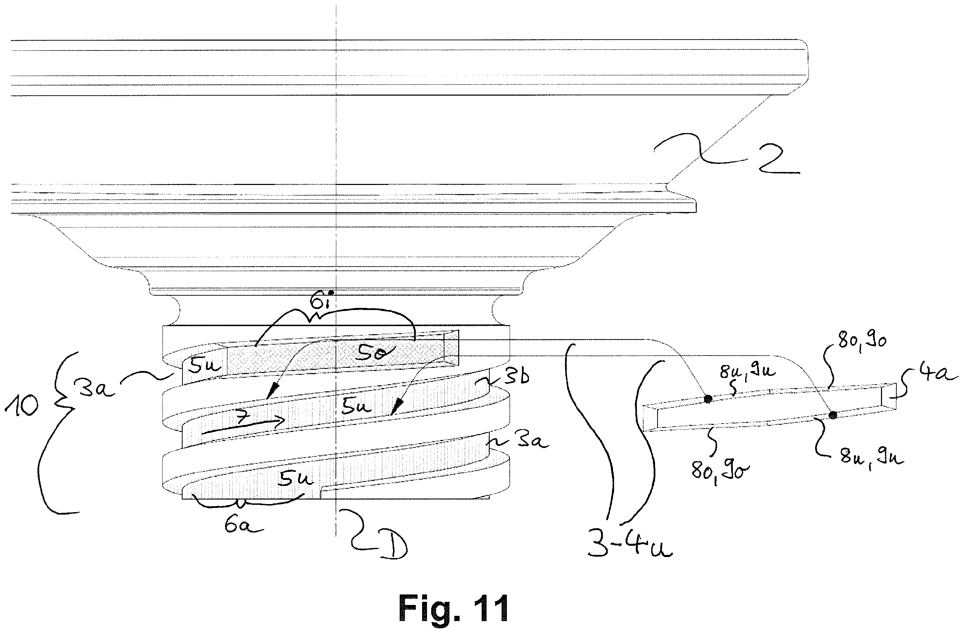

- Fig. 11: das Anliegen des Segments 4a in einem Gangabschnitt mit größerer Steigung 5u (also axial gesehen unterhalb des oberen Gangendes 6i), wobei das Segment 4a mit den entsprechenden Gewindegang-Anliegeflächen 8u größerer Segmentsteigung 9u (die gleich groß ist wie die größere Gewindegangsteigung 5u) anliegt.

Wie Figur 6 in einer ersten Ansicht zeigt, ist der im Wesentlichen (bis auf sein Gewinde) um die Drehachse D rotationssymmetrische Kannendeckel 2 ein sich von seiner oben in der Figur gezeigten Oberseite bis zu seiner Unterseite (unten in der Figur gezeigt) konisch verjüngender Deckel. Der untere, im Kreisausschnitt der Einzelheit Z gezeigte Deckelbereich ist als im Wesentlichen flachzylindrisches Element mit einem Außengewinde 10 versehen. Dieses Außengewinde 10 umfasst genau zwei Gewindegänge 3a und 3b. Die beiden Gewindegänge 3a, 3b winden sich von der Deckelunterseite (an dieser liegen die unteren bzw. äußeren Gewindegangenden 6a) an der Außenseite des flachzylindrischen Elements spiralförmig hin zum oberen Ende besagten flachzylindrischen Elements bzw. zum oberen Deckelende hin. Im oberen Bereich des flachzylindrischen Elements enden die beiden Gewindegänge 3a, 3b jeweils im oberen bzw. inneren Gewindegangende 6i.

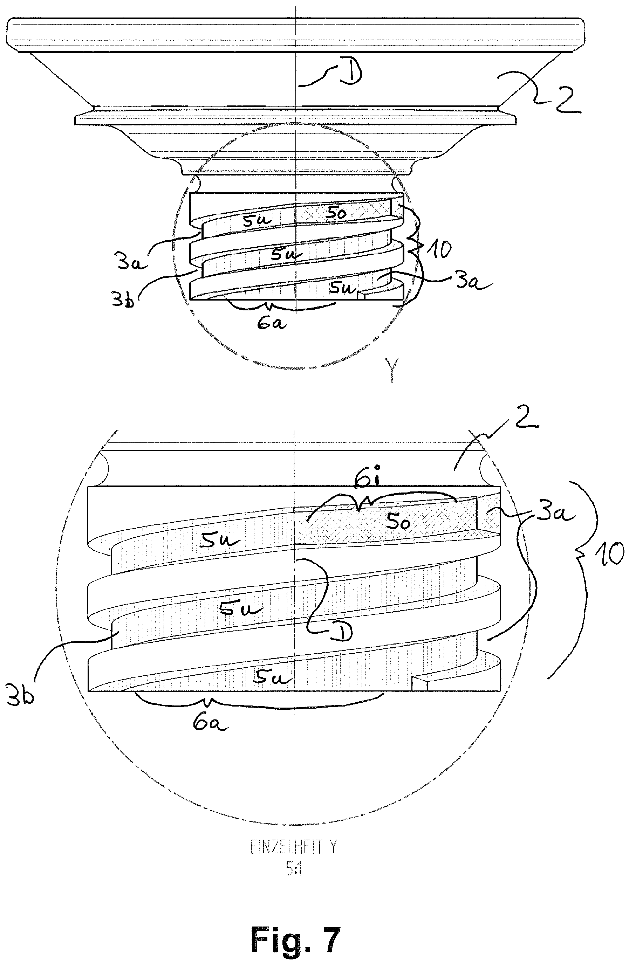

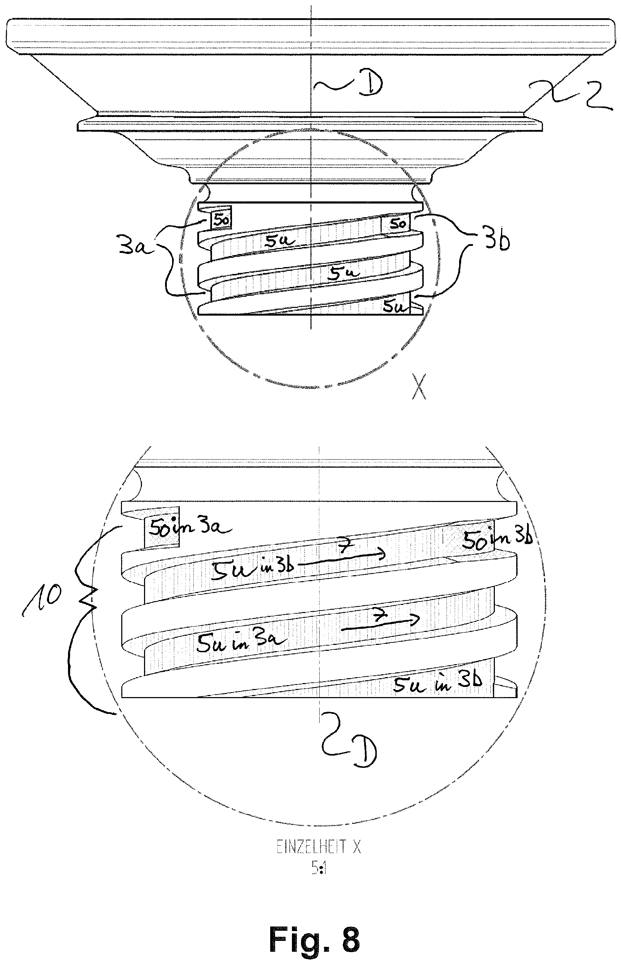

Wie den unterschiedlichen Ansichten der Figuren 6 bis 8 zu entnehmen ist, liegen die beiden äußeren Gewindegangenden 6a (es ist dabei jeweils nur eines dieser Enden zu sehen) sich in Bezug auf die Drehachse D gesehen diagonal gegenüber, sind also entlang des Außenumfangs des flachzylindrischen Elements des Deckels um 180 Grad (um die Drehachse D gesehen) versetzt zueinander positioniert. Entsprechendes gilt für die oberen, inneren Gewindegangenden 6i, von denen in den Figuren 6 und 7 jeweils nur eines zu sehen ist, in Figur 8 jedoch Abschnitte von beiden zu sehen sind (also vom inneren Gewindegangende 6i des Gewindegangs 3a sowie vom inneren Gewindegangende 6i des Gangs 3b). Die beiden Gewindegänge 3a und 3b winden sich somit mit in Axialrichtung (also in Längsrichtung bzw. in Richtung der Drehachse D gesehen) gesehen konstantem Abstand voneinander ca. 1.5 mal (also etwa um einen Winkel von 360° + 180° = 540°) um die Drehachse herum und nach oben: Schraubenförmiges Winden um den Außenumfang des flachzylindrischen Elements, jeweils vom äußeren Gewindegangende 6a zum inneren Gewindegangende 6i. Die beiden Gewindegänge 3a, 3b des Außengewindes 10 sind dabei als im Querschnitt rechteckige Vertiefungen (Kerben) in das flachzylindrische Element der unteren Deckelhälfte eingelassen.

In Gewindeganglängsrichtung 7 (vgl. Pfeile in Figuren 6 bis 8) weist nun jeweils der untere (also der zur Deckelunterseite hin liegende) Abschnitt bzw. Bereich der Gewindegänge 3a, 3b eine größere Steigung 5u auf, als der oben liegende (also zum oberen Bereich des Deckels hin weisende) Bereich der Gewindegänge 3a, 3b (die Steigung des letzteren ist mit 5o bezeichnet): Die Steigung dieser oberen Gewindegangbereiche der beiden Gänge 3a, 3b, also die Steigung 5o, ist hier beispielsweise um den Faktor 3.0 kleiner als die Steigung 5u in den unteren Gewindegangbereichen. Es gilt somit S₅ᵤ = 3.0 · S₅ₒ (mit S als der Steigung bzw. Ganghöhe).

Entlang der Gewindeganglängsrichtung 7 gesehen sind dabei die unteren Abschnitte der Gewindegänge 3a, 3b (also diejenigen Bereiche mit der Steigung 5u) deutlich länger als die oberen Abschnitte (also diejenigen mit der kleineren Steigung 5o): Die Abschnitte der Steigung 5u erstrecken sich, in Umfangsrichtung bzw. um die Drehachse D gesehen, etwa über 450°, wohingegen sich die Abschnitte der Steigung 5o lediglich über ca. 90° erstrecken. Die oberen Abschnitte der Steigung 5o fallen damit im Wesentlichen mit den inneren Gewindegangenden 6i zusammen.

Die dreifach geringere Steigung 5o der oberen Gewindegangbereiche hat folgenden Effekt: Kommen die sich in Umfangsrichtung über ebenfalls 90° erstreckenden Gewindesegmente 4a, 4b (vgl. nachfolgend) in diesen oberen Bereichen der Steigung 5o bzw. den oberen Gewindegangenden 6i zu liegen (dies ist die Position, wenn der Deckel 2 den Gefäßkörper 1 vollständig verschließt), so herrscht Selbsthemmung der beiden Segmente 4a, 4b in den beiden Abschnitten 6i. Der Deckel 2 öffnet sich dann nicht mehr selbsttätig, sondern muss von einem Benutzer des Gefäßes entgegen der Gewindeganglängsrichtung 7 (Pfeile in Figuren 6 bis 8) mit Kraftaufwand gedreht werden, um das Gefäß zu öffnen.

Im vorliegenden Schraubsystem besteht Selbsthemmung: Hierzu ist der Steigungswinkel kleiner als der Arkustangens der Haftreibungszahl der jeweiligen Materialpaarung (hier: Kunststoff für Körper 1 und Deckel 2) ausgeführt.

Die Figuren 6 bis 8 zeigen somit versetzt zueinander um die Drehachse D drei unterschiedliche Ansichten auf den Deckel 2 bzw. Projektionen des Deckels 2.

Figur 3 zeigt in Schnittansicht senkrecht zur Drehachse D (Figur 3 unten) das korrespondierend zum Außengewinde 10 des Deckels 2 ausgebildete Innengewinde 11 des Gefäßkörpers bzw. Isolierkannenkörpers 1. Dieses Innengewinde 11 ist hier (anders als das vollständig und mehr als 1.0-fach um die Drehachse D umlaufend ausgebildete Außengewinde 10 des Deckels 2) lediglich abschnittsweise umlaufend (also als Gewindesegment) ausgebildet. Das Innengewinde 11 besteht aus genau zwei korrespondierend zu den Gewindegängen 3a, 3b am Deckel 2 ausgebildeten, von der oberen Außgießöffnung im Kannenkörper 1 nach innen, also zur Drehachse hin vorspringenden (die Vorsprünge sind dabei im Querschnitt im wesentlichen komplementär zum Gegengewinde) Innengewindesegmenten 4a, 4b. Um die Drehachse D gesehen bzw. entlang des Isolierkannenkörperumfangs bzw. des inneren Außgießöffnungsumfangs gesehen sind die beiden Segmente 4a, 4b einander diagonal gegenüberliegend bzw. um 180° versetzt zueinander positioniert. Jedes der beiden Segmente 4a, 4b erstreckt sich dabei in Umfangsrichtung gesehen über einen Winkel von 90°.

In der Draufsicht der Figur 3 unten ist deutlich diese lediglich abschnittsweise Ausbildung des Innengewindes 11 durch die beiden Segmente 4a, 4b erkennbar bzw. es sind die beiden 90°-Unterbrechungen, die sich entlang des Umfangs gesehen zwischen diesen beiden Segmenten 4a, 4b erstrecken, klar zu sehen.

Figur 3 links oben sowie die Figuren 10 und 11 (jeweils rechts im Bild) zeigen in einer seitlichen Projektion auf die Drehachse D (Projektionsrichtung senkrecht zur Drehachse D und zur Längsachse der Segmente 4a, 4b bei Vernachlässigung der Krümmung der Segmente 4a, 4b) die Form der beiden Segmente 4a, 4b am Beispiel des Segments 4a. Das Segment 4b besitzt dieselbe Form.

Das als Innengewinde(segment) ausgebildete, also nach innen zur Drehachse D hin vorspringende Segment ist an seiner zur Oberseite des Körpers 1 hin gerichteten, also oberen Oberfläche 8u, 8o ebenso wie an seiner zur Unterseite des Körpers 1 hin, also unteren Oberfläche 8o, 8u mit zwei unterschiedlichen Steigungen versehen: Die beiden Gewinde-Anliegeflächen 8u der Oberseite und der Unterseite des Segments 4a weisen jeweils eine größere Segmentsteigung (Steigung 9u) auf als die beiden Gewinde-Anliegeflächen 8o an der Unterseite und an der Oberseite des Segments 4a, die eine geringere Segmentsteigung 9o aufweisen. Die Flächen 8u, 8o korrespondieren dabei mit den Gewindegangabschnitten 5u, 5o, so dass für die Segmentsteigungen SST ebenfalls gilt: 9u = 3.0 · 9o. Die Flächen 8u, 8o sind dabei diejenigen Flächen, die als Gewinde-Anliegeflächen in den unterschiedlichen Gewindegangabschnitten der Steigungen 5u, 5o (an der oberen Deckenfläche sowie an der unteren Deckenfläche des jeweiligen Gewindegangabschnitts) zum Anliegen kommen, also diese obere bzw. untere Deckenfläche des Gewindegangs 3a, 3b flächig berühren (vgl. dazu Figur 9).

Ist gemäß der momentanen Drehposition des Deckels 2 um die Drehachse D das Segment 4a so positioniert, dass es im unteren Gangbereich 5u eines Gangs 3a, 3b (bzw. im Bereich mit der Steigung 5u) zu liegen kommt, dürfen sich, damit sich die beiden Gewinde gegeneinander verdrehen können, die Flächen nicht gleichzeitig oben und unten berühren. An dieser Stelle sind in der Regel auch Fertigungstoleranzen zu berücksichtigen. D.h. in der Regel muss ein axiales Spiel angebracht werden. In diesem Zustand berühren dagegen die Gewinde-Anliegenflächen 8o mit ihrer geringeren Steigung 9o die Gangdecken- bzw. die Gangbodenfläche nicht. Vergleiche dazu die Position 4a(2) in Figur 9 und den mit 3-4u in Fig. 11 angedeuteten Eingriffszustand.

Ist dagegen gemäß der momentanen Drehposition des Deckels 2 um die Drehachse D das Gewindesegment 4a am oberen Gangende mit der Steigung 5o, also am inneren Gewindegangende 6i, positioniert (vgl. Position 4a(1) in Figur 9 und den mit 3-4o in Fig. 10 angedeuteten Eingriffszustand), dürfen sich ebenfalls, damit sich die beiden Gewinde gegeneinander verdrehen können, die Flächen nicht gleichzeitig oben und unten berühren. Auch an dieser Stelle sind in der Regel Fertigungstoleranzen zu berücksichtigen. D.h. in der Regel muss ein axiales Spiel angebracht werden. In diesem Fall weisen die Gewinde-Anliegeflächen 8u mit der größeren Segmentsteigung 9u einen Abstand von der Decken- bzw. Bodenfläche des Gangs 3a, 3b am inneren Gewindegangende 6i auf (vgl. Figur 9, Position 4a(1)).

Figur 9 skizziert also am Element 4a in oberer Position mit 8o die Gewinde-Anliegeflächen mit der flacheren Steigung in anliegendem Zustand mit der flacheren Gangsteigung 5o im Endbereich 6i: Näherungsweises Anliegen (bis auf das o.g. axiale Spiel) der flacheren Kontaktflächen des Segments 4a an der Boden- und der Deckenfläche des Gangs 3a, 3b. Figur 9 skizziert am Element 4a in unterer Position entsprechend das näherungsweise Anliegen (bis auf das o.g. axiale Spiel) der steileren Gewinde-Anliegeflächen 8u bzw. derjenigen Gewinde-Anliegeflächen 8u mit den größeren Segmentsteigungen 9u an die Decken- und an die Bodenfläche des Gangs 3a, 3b.

In Position 4a(2) des Segments 4a herrscht keine Selbsthemmung, wohingegen in Position 4a(1) des Segments 4a Selbsthemmung herrscht. Die Position im Bereich 6i in Figur 9 (Position 4a(1)) ist in Figur 10 auch mit dem Eingriff bzw. der Eingriffsposition 3-4o bezeichnet. Die Position 4a(2) aus Figur 9 ist in Figur 11 auch mit dem Eingriff bzw. der Eingriffsposition 3-4u bezeichnet.

Wie die Figuren 10 und 11 (rechts im Bild) und Figur 3 unten zeigen, erstrecken sich die beiden Flächen 8u, 8o der Oberseite des Segments 4a (bzw. 4b) ebenso wie die beiden Flächen 8o, 8u der Unterseite des Segments 4a (bzw. 4b) entlang der Umfangsrichtung (also um die Drehachse D gesehen) dabei jeweils über einen Winkel von 45° Grad. Entlang der Gewindeganglängsrichtung 7 gesehen sind die einzelnen Gewinde-Anliegeflächen 8u, 8o somit jeweils gleich lang, wobei sich am Segment 4a (bzw. 4b) die Fläche 8u der Oberseite und die Fläche 8u der Unterseite diagonal gegenüberliegen. Ebenso liegen sich am Segment 4a (bzw. 4b) die Fläche 8o der Oberseite und die Fläche 8o der Unterseite diagonal gegenüber.

Somit ist die Gewinde-Anliegefläche 8u auf der Oberseite des Segments 4a in Umfangsrichtung bzw. um die Drehachse D zur Gewinde-Anliegefläche 8u auf der Unterseite des Segments 4a um 45° versetzt (ebenso ist die Fläche 8o auf der Unterseite des Segments 4a in Umfangsrichtung bzw. um die Drehachse D um 45° versetzt zur Fläche 8o auf der oberen Seite des Segments 4a). Die Gewinde-Anliegefläche 8u auf der Oberseite des Segments 4a ist in Umfangsrichtung bzw. um die Drehachse D zur Gewinde-Anliegefläche 8u auf der Oberseite des Segments 4b um 180° versetzt. Ebenso ist die Fläche 8o auf der Oberseite des Segments 4a in Umfangsrichtung bzw. um die Drehachse D um 180° versetzt zur Fläche 8o auf der Oberseite des Segments 4b. (Entsprechendes gilt für die Unterseite.)

Da für die Segmentsteigungen 9u, 9o gilt, dass 9u = 3.0 · 9o ist, ist das Steigungsverhältnis bei den Gewinde-Anliegeflächen 8u, 8o dasselbe wie bei den Steigungen 5o, 5u der Gewindegänge 3a, 3b. Die (unterschiedlichen) Steigungen 5o, 5u der Gewindegänge 3a, 3b einerseits und die Segmentsteigungen 9o, 9u der Gewinde-Anliegeflächen 8o, 8u der Gewindesegmente 4a, 4b andererseits sind somit zueinander korrespondierend ausgeformt und positioniert.

Figur 1 zeigt einen Querschnitt durch den Kannenkörper 1 (bei fehlendem Deckel 2), wobei 20 den ein gerichtetes Außgießen der Flüssigkeit ermöglichenden Ausguss des Körpers 1 zeigt. Fig. 2 zeigt die Draufsicht auf die Kanne (senkrecht zur Achse D).

## Patentansprüche

1. Vorratsbehälter für Flüssigkeiten und/oder Streugut, mit einem Körper (1), der zum Aufnehmen einer Flüssigkeit und/oder von Streugut ausgebildet ist, und
einem in den Körper (1) zum Verschließen desselben eindrehbaren Deckel (2),
wobei zu besagtem Eindrehen der Deckel (2) einen Gewindegang (3a, 3b) und der Körper (1) ein vorspringendes, in Eingriff (3-4o, 3-4u) mit dem Gewindegang (3a, 3b) bringbares Gewindesegment (4a, 4b) aufweist oder umgekehrt, und
**dadurch gekennzeichnet, dass** der Gewindegang (3a, 3b) abschnittsweise unterschiedliche Steigungen (5o, 5u) aufweist.

2. Vorratsbehälter nach dem vorhergehenden Anspruch
***dadurch gekennzeichnet, dass***
zu besagtem Eindrehen der Deckel (2) mehrere Gewindegänge (3a, 3b) aufweist und der Körper (1) mehrere vorspringende, jeweils in Eingriff (3-4o, 3-4u) mit einem der oder mit den Gewindegänge(n) (3a, 3b) bringbare Gewindesegmente (4a, 4b) aufweist oder umgekehrt, wobei jeder der Gewindegänge (3a, 3b) abschnittsweise unterschiedliche Steigungen (5o, 5u) aufweist.

3. Vorratsbehälter nach dem vorhergehenden Anspruch
***gekennzeichnet durch***
genau zwei Gewindesegmente (4a, 4b), nämlich ein erstes (4a) und ein zweites (4b) Gewindesegment, und genau zwei Gewindegänge (3a, 3b), nämlich einen ersten (3a) und einen zweiten (3b) Gewindegang, wobei wenn das erste Gewindesegment (4a) in Eingriff mit dem ersten Gewindegang (3a) gebracht wird, parallel dazu auch das zweite Gewindesegment (4b) in Eingriff mit dem zweiten Gewindegang (3b) geht.

4. Vorratsbehälter nach einem der vorhergehenden Ansprüche
***dadurch gekennzeichnet, dass***
der oder die Gewindegang/gänge (3a, 3b) (jeweils) genau zwei unterschiedliche Steigungen (5o, 5u) aufweist/aufweisen.

5. Vorratsbehälter nach dem vorhergehenden Anspruch
***dadurch gekennzeichnet, dass***
der oder die Gewindegang/gänge (3a, 3b) (jeweils) am inneren Gewindegangende (6i), also an demjenigen Gewindegangende (6i), an dem im verschlossenen Zustand von Körper (1) und Deckel (2) das (jeweilige) Gewindesegment (4a, 4b) in den (jeweiligen) Gewindegang (3a, 3b) eingreifend positioniert ist, eine erste Steigung (5o) aufweist/aufweisen, die kleiner ist, als eine zweite Steigung (5u) am dem inneren Gewindegangende (6i) gegenüberliegenden, äußeren Gewindegangende (6a), also als an demjenigen Gewindegangende (6a), an dem im vollständig geöffneten Zustand von Körper (1) und Deckel (2) das (jeweilige) Gewindesegment (4a, 4b) aus dem (jeweiligen) Gewindegang (3a, 3b) beim Beenden des Eingriffs austritt.

6. Vorratsbehälter nach dem vorhergehenden Anspruch
***dadurch gekennzeichnet, dass***
für das Verhältnis V von der zweiten, also größeren, Steigung (5u) zur ersten, also kleineren, Steigung gilt: V ≥ 1.5, bevorzugt V ≥ 2.0, bevorzugt V ≥ 2.5, bevorzugt V ≥ 3.0.

7. Vorratsbehälter nach einem der vorhergehenden Ansprüche
***dadurch gekennzeichnet, dass***
das/die Gewindesegment(e) (4a, 4b) (ein) längliche(s) Gewindesegment(e) ist/sind, mit (jeweils) in Gewindeganglängsrichtung (7) gesehen mehreren, bevorzugt genau zwei, Gewindegang-Anliegeflächen (8o, 8u).

8. Vorratsbehälter nach dem vorhergehenden Anspruch
***dadurch gekennzeichnet, dass***
die Anzahl der Gewindegang-Anliegeflächen (8o, 8u) des/der Gewindesegments/e (4a, 4b) gleich ist der Anzahl der unterschiedlichen Steigungen (5o, 5u) des/der (jeweiligen) Gewindegangs/Gewindegänge (3a, 3b)
und/oder
dass die Gewindegang-Anliegeflächen (8o, 8u) des einen Gewindesegments oder eines jeden der Gewindesegmente (4a, 4b) in Gewindeganglängsrichtung (7) gesehen, also auch längs des/der Gewindesegments/e (4a, 4b) gesehen, unterschiedliche, mit den unterschiedlichen Steigungen (5o, 5u) des/der Gewindegangs/gänge (3a, 3b) korrespondierende Segmentsteigungen (9o, 9u) aufweisen.

9. Vorratsbehälter nach einem der vorhergehenden Ansprüche 1 bis 6
***dadurch gekennzeichnet, dass***
das/die Gewindesegment(e) (ein) nicht-längliche(r) Vorsprung/Vorsprünge ist/sind, bevorzugt (ein) runde(r), nichtlängliche(r), vorspringende(r) Zapfen ist/sind.

10. Vorratsbehälter nach einem der vorhergehenden Ansprüche
***dadurch gekennzeichnet, dass***
der Deckel (2) ein Außengewinde (10) aufweisend den/die Gewindegang/Gewindegänge (3a, 3b) und der Körper (1) ein Innengewinde (11) aufweisend das/die Gewindesegment(e) (4a, 4b) aufweist oder umgekehrt.

11. Vorratsbehälter nach einem der vorhergehenden Ansprüche bei Rückbezug auf Anspruch 5
***dadurch gekennzeichnet, dass***
der oder die Gewindegang/gänge (3a, 3b) (jeweils) am inneren Gewindegangende (6i) selbsthemmend ausgebildet ist/sind.

12. Vorratsbehälter nach einem der vorhergehenden Ansprüche
***dadurch gekennzeichnet, dass***
der Vorratsbehälter ein Isoliergefäß, insbesondere eine Isolierkanne und/oder eine Isolierkanne, ist.

13. Vorratsbehälterdeckel der so ausgebildet ist, dass er als der Deckel eines Vorratsbehälters nach einem der vorhergehenden Ansprüche verwendbar ist, **dadurch gekennzeichnet, dass** der Deckel (2) einen Gewindegang (3a, 3b) aufweist, der abschnittsweise unterschiedliche Steigungen (5o, 5u) aufweist.

## Claims

1. A storage container for fluids and/or grit, comprising
a member (1) that is configured to receive a fluid and/or grit; and
a lid (2) that can be screwed into the member (1) to close same;
wherein, for said screwing, the lid (2) has a thread turn (3a, 3b) and the member (1) has a projecting threaded segment (4a, 4b) that can be brought into engagement (3-4o, 3-4u) with the thread turn (3a, 3b), or vice versa, and
***characterized in that***
the thread turn (3a, 3b) sectionally has different pitches (5o, 5u).

2. A storage container in accordance with the preceding claim,
***characterized in that**,*
for said screwing, the lid (2) has a plurality of thread turns (3a, 3b) and the member (1) has a plurality of projecting threaded segments (4a, 4b) that can each be brought into engagement (3-4o, 3-4u) with one of the or with the thread turn(s) (3a, 3b), or vice versa,
with each of the thread turns (3a, 3b) sectionally having different pitches (5o, 5u).

3. A storage container in accordance with the preceding claim,
***characterized by***
exactly two threaded segments (4a, 4b), namely a first (4a) and a second (4b) threaded segment, and exactly two thread turns (3a, 3b), namely a first (3a) and a second (3b) thread turn, wherein, when the first threaded segment (4a) is brought into engagement with the first thread turn (3a), the second threaded segment (4b) also enters into engagement with the second thread turn (3b) in parallel therewith.

4. A storage container in accordance with one of the preceding claims,
***characterized in that***
the thread turn(s) (3a, 3b) (each) have exactly two different pitches (5o, 5u).

5. A storage container in accordance with the preceding claim,
***characterized in that***
the thread turn or turns (3a, 3b) (each) have a first pitch (5o) at the inner thread turn end (6i), that is, at that thread turn end (6i) at which the (respective) threaded segment (4a, 4b) is positioned in a manner engaging into the (respective) thread turn (3a, 3b) in the closed state of the member (1) and the lid (2), said first pitch (5o) being smaller than a second pitch (5u) at the outer thread turn end (6a) disposed opposite the inner thread turn end (6i), that is, at that thread turn end (6a) at which the (respective) threaded segment (4a, 4b) exits the (respective) thread turn (3a, 3b) on the ending of the engagement in the completely open state of the member (1) and the lid (2).

6. A storage container in *accordance with the preceding claim,*
***characterized in that***
for the ratio V of the second, i.e. larger, pitch (5u) to the first, i.e. smaller, pitch, the following applies: V ≥ 1.5, preferably V ≥ 2.0, preferably V ≥ 2.5, preferably V ≥ 3.0.

7. A storage container in accordance with one of the preceding claims,
***characterized in that***
the threaded segment or segments (4a, 4b) is/are (an) elongate threaded segment(s), (each) having a plurality of thread turn contact surfaces, preferably exactly two thread turn contact surfaces (8o, 8u), viewed in the longitudinal thread turn direction (7).

8. A storage container in accordance with the preceding claim,
***characterized in that***
the number of thread turn contact surfaces (8o, 8u) of the threaded segment(s) (4a, 4b) is the same as the number of different pitches (5o, 5u) of the (respective) thread turn(s) (3a, 3b);
and/or
**in that** the thread turn contact surfaces (8o, 8u) of the one threaded segment or of each threaded segment (4a, 4b) have different segment pitches (9o, 9u) corresponding to the different pitches (5o, 5u) of the thread turn(s) (3a, 3b), viewed in the longitudinal thread turn direction (7), that is, also viewed along the threaded segment(s) (4a, 4b).

9. A storage container in accordance with one of the preceding claims 1 to 6,
***characterized in that***
the threaded segment(s) is/are (a) non-elongate projection(s), preferably (a) round, non-elongate, projecting pin(s).

10. A storage container in accordance with one of the preceding claims,
***characterized in that***
the lid (2) has an external thread (10) having the thread turn(s) (3a, 3b) and the member (1) has an internal thread (11) having the threaded segment(s) (4a, 4b), or vice versa.

11. A storage container in accordance with one of the preceding claims dependent on claim 5,
***characterized in that***
the thread turn(s) (3a, 3b) is/are (each) formed as self-locking at the inner thread turn end (6i).

12. A storage container in accordance with one of the preceding claims,
***characterized in that***
the storage container is an insulating vessel, in particular a vacuum flask and/or a vacuum flask.

13. A storage container lid
that is configured such that it can be used as the lid of a storage container in accordance with one of the preceding claims,
**characterized in that** the lid (2) has a thread turn (3a, 3b) that has sectionally different pitches (5o, 5u).

## Revendications

1. Réservoir pour liquides et/ou un produit d'épandage, avec
un corps (1), qui est conçu pour le logement d'un liquide et/ou d'un produit d'épandage et
un couvercle (2) vissable avec le corps (1) pour la fermeture de celui-ci,
dans lequel, pour ledit vissage, le couvercle (2) comprend un filetage (3a, 3b) et le corps (1) comprend un segment fileté (4a, 4b) en saillie, pouvant être emboîté (3-4o, 3-4u) avec le filetage (3a, 3b) ou inversement et
**caractérisé en ce que**
le filetage (3a, 3b) comprend, à certains endroits, différents pas (5o, 5u).

2. Réservoir selon la revendication précédente,
**caractérisé en ce que**
pour ledit vissage, le couvercle (2) comprend plusieurs filetages (3a, 3b) et le corps (1) comprend plusieurs segments filetés (4a, 4b) en saillie, chacun pouvant être emboîté (3-4o, 3-4u) avec un ou avec les filetages (3a, 3b) ou inversement,
chacun des filetages (3a, 3b) présentant, sur certaines portions, différents pas (5o, 5u).

3. Réservoir selon la revendication précédente,
**caractérisé par**
exactement deux segments filetés (4a, 4b), à savoir un premier (4a) et un deuxième (4b) segment fileté, et exactement deux filetages (3a, 3b), à savoir un premier (3a) et un deuxième (4b) filetage, moyennant quoi, lorsque le premier segment fileté (4a) est emboîté avec le premier filetage (3a), parallèlement à cela, le deuxième segment fileté (4b) est également emboîté avec le deuxième filetage (3b).

4. Réservoir selon l'une des revendications précédentes,
**caractérisé en ce que**
le ou les filetage(s) (3a, 3b) comprend/comprennent (chacun) exactement deux pas (5o, 5u) différents.

5. Réservoir selon la revendication précédente,
**caractérisé en ce que**
le ou les filetage(s) (3a, 3b) comprend/comprennent (chacun), au niveau de l'extrémité intérieure du filetage (6i), donc au niveau de l'extrémité du filetage (6i) au niveau de laquelle, dans l'état fermé du corps (1) et du couvercle (2) le segment fileté (4a, 4b) (correspondant) est positionné de façon à être emboîté dans le filetage (3a, 3b) (correspondant), un premier pas (5o) qui est inférieur à un deuxième pas (5u), au niveau de l'extrémité extérieure du filetage (6a), opposée à l'extrémité intérieure du filetage (6i), donc, au niveau de l'extrémité de filetage (6a) au niveau de laquelle, dans l'état entièrement ouvert du corps (1) et du couvercle (2), le segment fileté (4a, 4b) sort du filetage (3a, 3b) (correspondant) à la fin de l'emboîtement.

6. Réservoir selon la revendication précédente,
**caractérisé en ce que**
pour le rapport V entre le deuxième pas (5u), donc le plus grand et le premier pas, donc le plus petit : V ≥ 1,5, de préférence V ≥ 2,0, de préférence V ≥ 2,5, de préférence V ≥ 3,0.

7. Réservoir selon l'une des revendications précédentes,
**caractérisé en ce que**
le/les segments fileté(s) (4a, 4b) est/sont (un) des segment(s) fileté(s), avec (chacun) plusieurs, de préférence exactement deux, surfaces d'appui de filetage (8o, 8u,) vues (chacune) dans la direction longitudinale du filetage (7).

8. Réservoir selon la revendication précédente,
**caractérisé en ce que**
le nombre de surfaces d'appui de filetage (8o, 8u) du/des segments fileté(s) (4a, 4b) est égal au nombre de pas différents (5o, 5u) du/des filetage(s) (3a, 3b) (correspondant)
et/ou
les surfaces d'appui de filetage (8o, 8u) du segment fileté ou de chacun des segments filetés (4a, 4b) vus dans la direction longitudinal du filetage (7), comprennent également, vus le long du/des segment(s) fileté(s) (4a, 4b), différents pas de segments (9o, 9u) correspondant au différents pas (5o, 5u) du/des segment(s) fileté(s) (3a, 3b).

9. Réservoir selon l'une des revendications précédentes 1 à 6,
**caractérisé en ce que**
le/les segments fileté(s) est/sont (une) des saillie(s) non allongée(s), de préférence est/sont (un) axe(s) en saillie rond(s) non allongé(s).

10. Réservoir selon l'une des revendications précédentes,
**caractérisé en ce que**
le couvercle (2) comprend un filetage externe (10) comprenant le/les filetage(s) (3a, 3b) et le corps (1) comprend un filetage interne (11) comprenant le/les segment(s) fileté(s) (4a, 4b) ou inversement.

11. Réservoir selon l'une des revendications précédentes en référence à la revendication 5,
**caractérisé en ce que**
le ou les filetage(s) (3a, 3b) est/sont conçu(s) de manière autobloquante (chacun) au niveau de l'extrémité intérieure du filetage (6i).

12. Réservoir selon l'une des revendications précédentes,
**caractérisé en ce que**
le réservoir est un récipient isolant, plus particulièrement une carafe isolante et/ou une carafe isolante.

13. Couvercle de réservoir, qui est conçu de façon à ce qu'il puisse être utilisé comme le couvercle d'un réservoir selon l'une des revendications précédentes, **caractérisé en ce que** le couvercle (2) comprend un filetage (3a, 3b) qui présente, sur certaines portions, des pas différents (5o, 5u).
